# EUROPÄISCHE PATENTSCHRIFT

(11) **EP 2 546 295 B1**
(45) Veröffentlichungstag und Bekanntmachung des Hinweises auf die Patenterteilung: **09.11.2016**
(21) Anmeldenummer: 11174032.0
(22) Anmeldetag: 14.07.2011
(51) Int. Cl.: C08K 3/00, C08K 3/08, C08K 3/16, C08K 3/22, C08L 77/00

(54) **Thermoplastische Formmassen mit verbesserter Stabilität gegen Wärmealterung**
Thermoplastic moulded substances with improved stability against heat aging
Masses de formage thermoplastiques dotées d'une stabilité améliorée contre le vieillissement thermique

(43) Veröffentlichungstag der Anmeldung: 16.01.2013
(73) Patentinhaber: LANXESS Deutschland GmbH, 50569 Köln (DE)
(72) Erfinder: Benighaus, Tobias, 40215 Düsseldorf (DE); Joachimi, Detlev, 47800 Krefeld (DE); Margraf, Günter, 41539 Dormagen (DE); Ruthard, Christian, 55270 Zornheim (DE)

(56) Entgegenhaltungen:
- EP-A1- 0 535 955
- EP-A1- 0 566 377
- WO-A1-02/42384
- WO-A1-2005/118722
- WO-A2-2007/017195
- US-A1- 2002 001 708

## Beschreibung

Die vorliegende Erfindung betrifft thermoplastische Formmassen mit verbesserter Stabilität gegen Wärmealterung.

Thermoplastische Formmassen zeigen im Allgemeinen eine Verschlechterung ihrer mechanischen Eigenschaften wenn sie über einen längeren Zeitraum erhöhten Temperaturen ausgesetzt werden. Dieser Effekt basiert primär auf der oxidativen Schädigung des Polymers. Ein längerer Zeitraum in Sinne der vorliegenden Erfindung bedeutet länger als 100 Stunden, erhöhte Temperaturen im Sinne der vorliegenden Erfindung bedeutet höher als 80 °C.

Die Stabilität thermoplastischer Formmassen gegen Wärmealterung wird daher üblicherweise durch den Vergleich mechanischer Eigenschaften, insbesondere der Schlagzähigkeit oder der Zugfestigkeit vor und nach Wärmealterung bei definierter Temperatur über einen definierten Zeitraum beurteilt. Da die oxidative Schädigung des Polymers oft mit einem Masseverlust verbunden ist, kann in den betreffenden Fällen auch dieser Wert zur Beurteilung der Stabilität gegen Wärmealterung herangezogen werden.

Zahlreiche Systeme zur Stabilisierung von Thermoplasten gegen die als Wärmealterung bezeichnete oxidative Schädigung und dem daraus resultierenden molekularen Abbau sind bekannt und wurden in der Literatur beschrieben. Eine Zusammenfassung findet sich im "Plastic Additives Handbook" (5th edition, Herausgeber: Hans Zweifel, Carl Hanser Verlag, München 2001) auf den Seiten 10 bis 19 und 40 bis 92. In technischen Thermoplasten, insbesondere Polyamiden, werden üblicherweise Antioxidantien auf Basis sterisch gehinderter Phenole oder aromatischer Amine als organische Stabilisatoren oder Systeme auf Basis von Kupferverbindungen als anorganische Stabilisatoren eingesetzt. Die genannten organischen Stabilisatoren werden im Allgemeinen für Temperaturen bis ca. 120 °C eingesetzt. Eine effektive Stabilisierung bei höheren Temperaturen bis ca. 140 °C wird durch Stabilisatorsysteme auf Basis von Mischungen aus Kupferhalogeniden und Alkalihalogeniden erreicht.

DE-4305166 A1 beschreibt eine Verbesserung der kupferbasierten Thermostabilisierungen durch Zugabe von starken Reduktionsmitteln, die zu einer in-situ-Bildung von fein verteiltem elementarem Kupfer führt. In dieser Anmeldung wird auch gezeigt, dass kolloidales elementares Kupfer, das nicht in-situ erzeugt wird, eine deutlich geringere Aktivität aufweist.

In WO2005/007727 A1 wird die Verwendung von fein verteiltem elementarem Eisen als Thermostabilisator beschrieben. Dieses ist den bis dahin herkömmlichen kupferbasierten Thermostabilisatoren überlegen. Eine in-situ-Reduktion von Eisen soll durch den Prozess, der in WO2005/007727 A1 beschrieben wird, vermieden werden, indem das elementare Eisen in Form eines feinen Pulvers mit einer mittleren gewichtsgemittelten Größe von maximal 450 µm zugegeben wird.

Dieser Entwicklung geht die Verwendung von fein verteiltem elementarem Eisen als Sauerstofffänger gemäß US-A 5,744,056 voraus. Die Verwendung von elementarem Eisen oder auch anderen elementaren Metallen in Form eines feinen Pulvers ist jedoch auch mit Nachteilen verbunden. Unedle Metalle wie Eisen werden auch bei normaler Umgebungstemperatur oberflächlich schnell durch Luftsauerstoff oxidiert. Dadurch wird die Oberfläche der einzelnen Metallpartikel von einer Oxidschicht überzogen, die die Aktivität der Metallpartikel als Sauerstofffänger reduziert und deshalb ihren Einsatz als Thermostabilisatoren einschränkt. Unedle Metalle im Sinne der vorliegenden Erfindung sind Metalle, die bei Normalbedingungen mit dem Sauerstoff aus der Luft reagieren, sie oxidieren. Dies trifft u.a. auf Eisen, Zink oder Aluminium zu. Unedle Metalle im Sinne der vorliegenden Erfindung sind deshalb Metalle, deren Redoxpaare negativere Standardpotentiale als die Normal-Wasserstoffelektrode haben.

Des Weiteren ist die Verwendung feiner Metallpulver auch unter Sicherheitsaspekten problematisch. Auch unedle Metalle reagieren unter normalen Bedingungen nur langsam mit Luftsauerstoff. Für die Funktion als Sauerstofffänger ist ein hohes Verhältnis von Oberfläche zu Gewicht vorteilhaft. Unter diesen Bedingungen werden jedoch viele Metalle, unter ihnen auch Eisen, pyrophor. Daher ist bei der Verwendung von feinen Metallpulvem die Gefahr von Metallbränden und Staubexplosionen hoch. Dieses Phänomen ist in der Literatur für Eisen beschrieben, beispielsweise im Lehrbuch der Anorganischen Chemie, 101. Auflage, Hollemann,Wiberg, deGruyter, 1995,1511 - 1514.

Eine Lösung dieses Problems ist die in-situ-Reduktion von Metallsalzen oder anderen geeigneten Metallverbindungen in der Polymerschmelze mit Reduktionsmitteln, beispielsweise Hypophosphitsalzen oder Salzen der Dithionsäure. Bei diesem Ansatz müssen Metallsalz und Reduktionsmittel in der Polymerschmelze zur Reaktion gebracht werden. Aufgrund möglicher Nebenreaktionen mit dem Thermoplast und/oder der Bildung gasförmiger Komponenten, kann das Reduktionsmittel nur in geringen Konzentrationen in die Schmelze eingebracht werden. Daher ist es schwierig, die Erzeugung einer ausreichenden Menge Metalls für die Thermostabilisierung des Thermoplasten durch Reduktion sicherzustellen.

Der vorliegenden Erfindung lag daher die Aufgabe zugrunde, einen Stabilisator für thermoplastische Formmassen zur Verfügung zu stellen, der die Stabilität gegen Wärmealterung über das bekannte Maß hinaus verbessert und die oben genannten Nachteile vermeidet.

Die Lösung der Aufgabe und Gegenstand der vorliegenden Erfindung ist die Verwendung gemäß Anspruch 1.

Gegenstand der Erfindung sind auch thermoplastische Formmassen gemäß Anspruch 5.

Gegenstand der Erfindung ist auch ein Verfahren zur Herstellung thermoplastischer Formmassen gemäß Anspruch 10 sowie die Verwendung der thermoplastischen Formmassen gemäß Anspruch 8.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

Partikel liegen dann fein verteilt im Sinn der Erfindung vor, wenn sie in der Matrix eine mittlere Partikelgröße d₅₀ von maximal 500 µm aufweisen, wobei jede Partikelagglomeration ohne Matrix zwischen den Grenzflächen der einzelnen Partikel als ein Gesamtpartikel für die Berchnung des d₅₀-Wertes betrachtet wird.

Als Metall 1 wird Aluminium eingesetzt und als Verbindung aus Metall 2 mit mindestens einem weiteren Element Eisen(III)-Oxid.

Die Partikel des erfindungsgemäßen Stabilisators können unterschiedliche Formen haben, die einen Kontakt zwischen Metall 1 und der Verbindung von Metall 2 mit mindestens einem weiteren Element aufweisen. Der Kontakt zwischen den beiden Komponenten kann dabei direkt sein, wobei beide Komponenten mindestens eine gemeinsame Grenzfläche haben, oder indirekt, wenn die beiden Komponenten durch elektrisch leitendes Material verbunden sind.

Erfindungsgemäß bevorzugte Formen mit einem direkten Kontakt zwischen den beiden Komponenten des erfindungsgemäßen Stabilisators sind entweder Partikel, die aus einem Kern aus Metall 1 bestehen, der zumindest teilweise mit der Verbindung von Metall 2 mit mindestens einem weiteren Element beschichtet ist oder Plättchen, die aus zwei Schichten bestehen, wobei eine Schicht aus Metall 1 ist und die andere Schicht aus der Verbindung von Metall 2 mit mindestens einem weiteren Element besteht.

Erfindungsgemäß bevorzugte Formen mit einem indirekten Kontakt zwischen den beiden Komponenten sind Partikel, die aus einem Kern aus elektrisch leitendem Material bestehen, der zumindest teilweise mit Metall 1 und der Verbindung aus Metall 2 mit mindestens einem weiteren Element beschichtet ist.

Bevorzugt wird das erfindungsgemäß einzusetzende Stabilisatorsystem als Pulver, Paste oder Kompaktat eingesetzt. Bevorzugte Pulver des erfindungsgemäß einzusetzenden Stabilisatorsystems weisen eine mittlere Partikelgröße d₅₀ von maximal 500 µm, bevorzugt 1 bis 250 µm, besonders bevorzugt von 5 bis 150 µm auf (gemäß ASTM D 1921-89, Methode A) wodurch die feine Verteilung im Thermoplasten gewährleistet wird. Wird der Stabilisator als Paste oder Kompaktat eingesetzt, so können die üblicherweise für die Herstellung von Pasten oder Kompaktaten eingesetzten Bindemittel, bevorzugt Wachse, Öle, Polyglykole oder ähnliche Verbindungen in geeigneten Mengenanteilen eingesetzt werden.

Ein erfindungsgemäß insbesondere bevorzugt einzusetzendes Stabilisatorsystem ist Aluminiumpulver mit Fe₂O₃-Beschichtung, das als Paliocrom^{®} Gold L 2020 oder Paliocrom^{®} Orange L 2800 der BASF SE als Paste in Benzin erhältlich ist.

Um eine besonders gute Verteilung der Partikel des erfindungsgemäßen Stabilisators zu erreichen, kann ein Batch aus Stabilisatorsystem mit einem Polymer eingesetzt werden. Bevorzugt kommen Polymere der Reihe Polyolefine, Polyester oder Polyamide als Batchträger infrage. Besonders bevorzugt wird das Polymer eingesetzt, das in der Gesamtzusammensetzung der thermoplastischen Formmasse die kontinuierliche Phase ist. Als kontinuierliche Phase wird im Rahmen der vorliegenden Erfindung ein räumlich zusammenhängender Bereich mit gleichen oder sich nicht sprunghaft ändernden Eigenschaften bezeichnet.

Der Thermoplast in der kontinuierlichen Phase einer erfindungsgemäßen Zusammensetzung ist ein semi-kristallines Polyamid, insbesondere Polyamid 6 oder Polyamid 66 mit relativen Lösungsviskositäten in m-Kresol von 2,0 bis 4,0, insbesondere bevorzugt Polyamid 6 mit einer relativen Lösungsviskosität in m-Kresol von 2,3-3,2.

Bei Verfahren zur Bestimmung der Lösungsviskosität werden die Durchlaufzeiten eines gelösten Polymers durch ein Ubbelohde-Viskosimeter gemessen, um anschließend den Viskositätsunterschied zwischen Polymerlösung und seinem Lösungsmittel, hier m-Kresol, zu bestimmen. Daraus lässt sich unter Berücksichtigung der Massekonzentration der Polymerlösung die Viskositätszahl ermitteln. Die Viskositätszahl lässt sich mit der Molmasse eines Polymers korrelieren. Durch starke Beanspruchung, z. B. während der Verarbeitung, erfolgt häufig ein molekularer Abbau des Polymers. Ein derartiger Effekt lässt sich über die Ermittlung der Viskositätszahl quantifizieren. Auch molekulare Veränderungen infolge von Lagerungen in Medien sind über dieses Verfahren detektierbar. Anwendbare Normen: sind DIN 51562; DIN ISO 1628 oder entsprechende Normen. Auch Blends aus Polyamid 6, Polyamid 66, Polyamid 46, Polyamid 12 oder Copolyamiden sind einsetzbar. Darüber hinaus können die erfindungsgemäßen thermoplastischen Formmassen auch Blends aus den beschriebenen Polyamiden und weiteren thermoplastischen Polymeren wie Polyphenylenoxid, Polyethylen oder Polypropylen enthalten.

Die in den erfindungsgemäßen thermoplastischen Formmassen enthaltenen Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden verlaufen meist über die Polykondensation in der Schmelze. Im Rahmen der vorliegenden Erfindung wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt werden Caprolactame, ganz besonders bevorzugt wird ε-caprolactam eingesetzt.

Insbesondere besonders bevorzugt sind erfindungsgemäß weiterhin die meisten auf PA6, PA66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

Erfindungsgemäß bevorzugt sind thermoplastische Formmassen, dadurch gekennzeichnet, dass diese
A. 5 bis 99,899 Gew.-% Thermoplast,
B. 0,001 bis 20 Gew.-%, bevorzugt 0,005 bis 5 Gew.-%, besonders bevorzugt 0,01 bis 2 Gew.-% eines erfindungsgemäßen Stabilisatorsystems und
C. 0,1 bis 30 Gew.-%, bevorzugt 0,5 bis 20 Gew.-%, besonders bevorzugt 0,5 bis 15 Gew.-% weitere Additive
enthalten.

Weitere Additive im Sinne der vorliegenden Erfindung sind bevorzugt weitere Thermostabilisatoren die nicht unter die Definition des erfindungsgemäß einzusetzenden Stabilisatorsystems fallen, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die Additive können alleine oder in Mischung bzw. in Form von Masterbatchen eingesetzt werden.

Erfindungsgemäß bevorzugt als Additiv einzusetzende zusätzliche Thermostabilisatoren die nicht unter die oben genannte Definition des erfindungsgemäß einzusetzenden Stabilisatorsystems fallen, sind Kupferverbindungen, insbesondere Kupferhalogenide in Kombination mit Alkalimetallhalogeniden, sterisch gehinderte Phenole und/oder Phosphite, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen.

Erfindungsgemäß bevorzugt als Additiv einzusetzende UV-Stabilisatoren sind substituierte Resorcine, Salicylate, Benzotriazole oder Benzophenone.

Im Falle erfindungsgemäß bevorzugt einzusetzender Schlagzähmodifikatoren oder Elastomermodifikatoren handelt es sich ganz allgemein um Copolymerisate, die bevorzugt aus mindestens zwei der folgenden Reihe an Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente. Die Copolymerisate können kompatibilisierende Gruppen, bevorzugt Maleinsäureanhydrid oder Epoxid enthalten.

Erfindungsgemäß als Additiv bevorzugt einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel sein.

Erfindungsgemäß als Additiv bevorzugt einzusetzende Nukleierungsmittel sind Natrium- oder Calciumphenylphosphinat, Aluminiumoxid oder Siliziumdioxid oder Talkum, insbesondere bevorzugt Talkum.

Erfindungsgemäß als Additiv bevorzugt einzusetzende Gleit- und/oder Entformungsmittel sind langkettige Fettsäuren, insbesondere Stearinsäure, deren Salze, insbesondere Ca- oder Zn-Stearat sowie deren Esterderivate oder Amidderivate, insbesondere Ethylen-bis-stearylamid, Glyzerintristearat, Stearylstearat, Montanwachse, insbesondere Ester von Montansäuren mit Ethylenglycol sowie niedermolekulare Polyethylen- bzw. Polypropylenwachse in oxidierter und nicht-oxidierter Form. Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen enthalten. Es können auch Mischungen verschiedener Gleit- und Entformungsmittel eingesetzt werden, wobei das Mischungsverhältnis beliebig ist.

Ebenso kommen als Gleitmittel Copolymerisate aus Olefinen und Methacrylsäureestern oder aus Olefinen und Acrylsäureestern gemäß WO2005/121249 A1 oder polyhydrische Alkohole gemäß EP 1041109 A2 in Frage.

In einer weiteren bevorzugten Ausführungsform können die erfindungsgemäßen Formmassen zusätzlich zu den oben genannten Komponenten A bis C oder anstelle der genannten Additive der Komponente C noch
D. 1 bis 70 Gew.-%, bevorzugt 5 bis 40 Gew.-%, besonders bevorzugt 10 bis 30 Gew.-% Füll- bzw. Verstärkungsstoffe, bevorzugt Glasfasern oder Carbonfasern enthalten.

Erfindungsgemäß besonders bevorzugt sind deshalb thermoplastische Formmassen, dadurch gekennzeichnet, dass diese
A. 5 bis 98,899 Gew.-% Thermoplast,
B. 0,001 bis 20 Gew.-%, bevorzugt 0,005 bis 5 Gew.-%, besonders bevorzugt 0,01 bis 2 Gew.-% eines erfindungsgemäßen Stabilisators,
C. 0,1 bis 30 Gew.-%, bevorzugt 0,5 bis 20 Gew.-%, besonders bevorzugt 0,5 bis 15 Gew.-% weitere Additive und
D. 1 bis 70 Gew.-%, bevorzugt 5 bis 40 Gew.-%, besonders bevorzugt 10 bis 30 Gew.-% Füll- bzw. Verstärkungsstoffe, bevorzugt Glasfasern oder Carbonfasern enthalten.

Für das erfindungsgemäße Verfahren zur Herstellung der erfindungsgemäßen thermoplastischen Formmassen werden bevorzugt bereits in Polymerform vorliegende Thermoplaste eingesetzt. Das Mischen der Komponenten A bis C oder A bis D erfolgt in den entsprechenden Gewichtsanteilen. Vorzugsweise geschieht das Mischen (Compoundieren) der Komponenten bei Temperaturen von 220 bis 360°C durch gemeinsames Vermengen, Vermischen, Kneten, Compoundieren, Extrudieren oder Verwalzen der Komponenten, besonders bevorzugt durch Compoundieren auf einem gleich-läufigen Zweiwellenextruder oder Buss-Kneter. Es kann vorteilhaft sein, einzelne Komponenten vorzumischen. Es kann weiterhin vorteilhaft sein, Formteile oder Halbzeuge aus einer bei Raumtemperatur, bevorzugt 0 bis 40°C, hergestellten physikalischen Mischung (Dryblend) vorgemischter Komponenten und/oder einzelner Komponenten direkt herzustellen. Die erfindungsgemäß herzustellenden Formmassen können nach Verfahren, die dem Fachmann bekannt sind, insbesondere durch Extrudieren, Blasformen oder Spritzgießen verarbeitet werden. Gegenstand der vorliegenden Erfindung ist deshalb auch ein Verfahren zur Herstellung der erfindungsgemäßen Formmassen, dadurch gekennzeichnet, dass man die Komponenten A bis C und gegebenenfalls noch D in entsprechenden Gewichtsanteilen mischt, bevorzugt bei 220 bis 360°C, besonders bevorzugt durch Vermengen, Vermischen, Kneten, Compoundieren, Extrudieren oder Verwalzen.

Die erfindungsgemäß aus den Formmassen herzustellenden Formteile können bevorzugt in der Kraftfahrzeug-, Elektro-, Elektronik-, Telekommunikations-, Informationstechnologie-, Computerindustrie, im Haushalt, Sport, in der Medizin oder in der Unterhaltungsindustrie angewandt werden. Insbesondere können erfindungsgemäße Formmassen für Anwendungen eingesetzt werden, für die eine hohe Stabilität gegen Wärmealterung erforderlich ist. Bevorzugt für derartige Anwendungen ist die Verwendung für Bauteile in Fahrzeugen, insbesondere in Kraftfahrzeugen (KFZ), insbesondere im KFZ-Motorraum. Die vorliegende Erfindung betrifft deshalb auch die Verwendung von Formmassen enthaltend das erfindungsgemäß einzusetzende Stabilisatorsystem zur Herstellung von Bauteilen und Artikeln mit erhöhter Stabilität gegen thermooxidative Schädigung, bevorzugt von Bauteilen für KFZs, insbesondere bevorzugt für den Motorraum von KFZs. Die erfindungsgemäßen Formmassen sind außerdem auch für Anwendungen bzw. Bauteile oder Artikel geeignet, wo zusätzlich zur thermooxidativen Stabilität eine Stabilität gegenüber photooxidative Schädigung erforderlich ist, bevorzugt Solaranlagen.

### Beispiele

Zum Nachweis der erfindungsgemäß beschriebenen Verbesserungen wurden zunächst durch Compoundierung entsprechende Kunststoff-Formmassen angefertigt.

Vor der Compoundierung wurde Aluminiumpulver mit Fe₂O₃-Beschichtung als Paste in Testbenzin auf einen Teil der Polyamid 6-Granulatkörner aufgetragen. Das Testbenzin wurde durch Abdampfen bei Raumtemperatur entfernt und das Aluminiumpulver mit Fe₂O₃-Beschichtung über die beschichteten Granulatkörner dosiert.

Die einzelnen Komponenten wurden in einem Zweiwellenextruder des Typs ZSK 32 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfahigkeit abgekühlt und granuliert. Das Granulat wurde zwei Tage bei 70°C im Vakuumtrockenschrank getrocknet.

Anschließend wurde das Granulat einer Wärmealterung bei 210 °C in Luftatmosphäre unterzogen und der Verlauf der Alterung wurde durch Messung des Gewichtsverlusts verfolgt.

Die in der folgenden Tabelle dargestellten Zusammensetzungen wurden alle nach der oben beschriebenen Weise verarbeitet.

**Tabelle 1: Zusammensetzungen der Formmassen und Gewichtsverlust nach Wärmealterung (alle Angaben in Gew. %).**

| | **Vergleichsbeispiel 1** | **Vergleichsbeispiel 2** | **Beispiel 1** |
|---|---|---|---|
| Polyamid 6 | 69,68 | 69,77 | 69,77 |
| Glasfaser | 30,00 | 30,00 | 30,00 |
| Montanesterwachs | 0,16 | 0,16 | 0,16 |
| Mikrotalkum | 0,02 | 0,02 | 0,02 |
| Kaliumbromid | 0,10 | 0,00 | 0,00 |
| Kupfer(I)-Iodid | 0,04 | 0,00 | 0,00 |
| Eisenpulver | 0,00 | 0,05 | 0,00 |
| Aluminiumpulver mit Fe₂O₃-Beschichtung | 0,00 | 0,00 | 0,05 |
| | | | |
| Massenverlust nach 0 h | 0,00 | 0,00 | 0,00 |
| Massenverlust nach 168 h bei 210 °C | 7,31 | 5,13 | 5,73 |
| Massenverlust nach 336 h bei 210 °C | 9,69 | 8,39 | 7,50 |
| Massenverlust nach 504 h bei 210 °C | 12,40 | 11,97 | 9,33 |
| Massenverlust nach 672 h bei 210 °C | 16,76 | 16,23 | 11,31 |

Das Beispiel zeigt, dass der prozentuale Massenverlust nach 672 h Alterung bei 210 °C einer erfindungsgemäßen Zusammensetzung kleiner ist, als bei den Vergleichsbeispielen 1 und 2.

Verwendete Materialien:
Polyamid 6, linear mit einer relativen Lösungsviskosität einer 1%eigen Lösung in m-Kresol von 2,9
Montanesterwachs, z.B. Licowax^{®} E von Clariant GmbH
Glasfasern, z.B. CS7928 von Lanxess Deutschland GmbH
Kaliumbromid, d₉₉ < 70 µm
Kupfer(I)-Iodid, d₉₉ < 70 µm
Talkum
Eisenpulver, z.B. Mastersafe Eisen VP 58031 von Eckart GmbH (90% Eisen in Polyethylen-Wachs)
Aluminiumpulver mit Fe₂O₃-Beschichtung, z.B. enthalten in Paliocrom^{®} Orange L2800 von BASF SE

## Patentansprüche

1. Verwendung eines Stabilisatorsystems aus fein verteilen Partikeln enthaltend ein elementares Metall 1 und eine Verbindung eines Metalls 2 mit mindestens einem weiteren Element, **dadurch gekennzeichnet, dass**
a. Metall 1 unedler ist als Metall 2, und
b. Metall 1 und die Verbindung aus Metall 2 mit mindestens einem weiteren Element in Kontakt miteinander sind
zur Verminderung der thermooxidativen Alterung von Thermoplasten oder zur Stabilisierung von Thermoplasten gegen thermooxidativen Abbau, wobei als Metall 1 Aluminium eingesetzt wird, die Verbindung aus Metall 2 Eisen(III)oxid ist und es sich bei dem Thermoplast um semi-kristallines Polyamid handelt.

2. Verwendung gemäß Anspruch 1 **dadurch gekennzeichnet, dass** das Stabilisatorsystem eine Paste aus Aluminiumpulver mit Fe₂O₃-Beschichtung in Benzin ist.

3. Verwendung gemäß der Ansprüche 1 oder 2, **dadurch gekennzeichnet, dass** die Partikelgrößenverteilung des Stabilisatorsystems einen d₅₀-Wert kleiner 500 µm aufweist.

4. Verwendung gemäß einer der Ansprüche 1 bis 3 **dadurch gekennzeichnet, dass** es sich bei dem Thermoplast um Polyamid 6 oder Polyamid 66 mit relativen Lösungsviskositäten in m-Kresol von 2,0 bis 4,0 handelt.

5. Thermoplastische Formmassen, **dadurch gekennzeichnet, dass** diese
A 5 bis 98,999 Gew.-% Thermoplast,
B 0,001 bis 20 Gew.-% Stabilisatorsystem und
C 1 bis 30 Gew.-% weitere Additive enthalten
und als Stabilisatorsystem ein elementares Metall 1 und eine Verbindung eines Metalls 2 mit mindestens einem weiteren Element eingesetzt wird, wobei
a. Metall 1 unedler ist als Metall 2, und
b Metall 1 und die Verbindung aus Metall 2 mit mindestens einem weiteren Element in Kontakt miteinander sind und als Metall 1Aluminium, als Verbindung aus Metall 2 mit mindestens einem weiteren Element Eisen(III)oxid und als Thermoplast semi-kristallines Polyamid eingesetzt wird.

6. Thermoplastische Formmassen gemäß Anspruch 5, **dadurch gekennzeichnet, dass** diese zusätzlich D 1 bis 70 Gew.-% Füll- bzw. Verstärkungsstoffe enthalten.

7. Thermoplastische Formmassen gemäß einem der Ansprüche 5 oder 6, **dadurch gekennzeichnet**, als Polyamid PA6, PA66 oder ein Co-Polyamid von PA6 oder PA66 eingesetzt wird.

8. Verwendung der thermoplastischen Formmassen gemäß einem der Ansprüche 5 bis 7 zur Herstellung von Bauteilen und Artikeln mit erhöhter Stabilität gegenüber thermooxidativem Abbau, bevorzugt in der Elektro-, Elektronik-, Telekommunikations-, Informationstechnologie-, Computerindustrie, im Haushalt, Sport, in der Medizin oder der Unterhaltungsindustrie, besonders bevorzugt in Kraftfahrzeugen, ganz besonders bevorzugt für den Motorraum von Kraftfahrzeugen.

9. Verwendung von thermoplastischen Formmassen gemäß Anspruch 8 zur Herstellung von Bauteilen und Artikeln mit zusätzlicher Stabilität gegenüber photooxidativer Schädigung, bevorzugt von Solaranlagen.

10. Verfahren zur Herstellung thermoplastischer Formmassen gemäß einer der Ansprüche 5 bis 7, **dadurch gekennzeichnet, dass** man die Komponenten A bis C und gegebenenfalls noch D in entsprechenden Gewichtsanteilen mischt, bevorzugt bei 220 bis 360°C, besonders bevorzugt durch Vermengen, Vermischen, Kneten, Compoundieren, Extrudieren oder Verwalzen.

## Claims

1. Use of a stabilizer system made of finely distributed particles comprising an elemental metal 1 and a compound of a metal 2 with at least one other element, **characterized in that**
a. metal 1 is less noble than metal 2, and
b. metal 1 and the compound of metal 2 with at least one other element are in contact with one another
for preventing the thermo-oxidative ageing of thermoplastics or for the stabilization of thermoplastics with respect to thermo-oxidative degradation, where aluminium is used as metal 1, the compound of metal 2 is iron(III) oxide and the thermoplastic is semicrystalline polyamide.

2. Use according to Claim 1, **characterized in that** the stabilizer system is a paste made of aluminium powder with Fe₂O₃ coating in petroleum spirit.

3. Use according to Claim 1 or 2, **characterized in that** the particle size distribution of the stabilizer system has a d₅₀ value smaller than 500 µm.

4. Use according to any of Claims 1 to 3, **characterized in that** the thermoplastic is polyamide 6 or polyamide 66 with relative solution viscosities in m-cresol of from 2.0 to 4.0.

5. Thermoplastic moulding compositions **characterized in that** these comprise
A from 5 to 98.999% by weight of thermoplastic,
B from 0.001 to 20% by weight of stabilizer system and
C from 1 to 30% by weight of other additives
and use, as stabilizer system, an elemental metal 1 and a compound of a metal 2 with at least one other element, where
a. metal 1 is less noble than metal 2, and
b. metal 1 and the compound of metal 2 with at least one other element are in contact with one another and aluminium is used as metal 1, iron(III) oxide is used as compound of metal 2 with at least one other element and semicrystalline polyamide is used as thermoplastic.

6. Thermoplastic moulding compositions according to Claim 5, **characterized in that** these additionally comprise
D from 1 to 70% by weight of fillers and/or reinforcing materials.

7. Thermoplastic moulding compositions according to Claim 5 or 6, **characterized in that** PA6, PA66 or a copolyamide of PA6 or PA66 is used as polyamide.

8. Use of the thermoplastic moulding compositions according to any of Claims 5 to 7 for the production of components and items with increased stability with respect to thermo-oxidative degradation, preferably in the electrical industry, electronics industry, telecommunications industry, information technology industry, computer industry, in households, in sports, in medicine or in the entertainment industry, particularly preferably in motor vehicles, very particularly preferably for the engine compartment of motor vehicles.

9. Use of thermoplastic moulding compositions according to Claim 8 for the production of components and items with additional stability with respect to photooxidative degradation, preferably of solar installations.

10. Process for the production of thermoplastic moulding compositions according to any of Claims 5 to 7, **characterized in that** components A to C and optionally also D are mixed in appropriate proportions by weight, preferably at from 220 to 360°C, particularly preferably via mixing, kneading, compounding, extrusion or rolling.

## Revendications

1. Utilisation d'un système stabilisant à base de particules finement divisées, contenant un métal élémentaire 1 et un composé d'un métal 2 avec au moins un autre élément, **caractérisé en ce que**
a. le métal 1 est moins noble que le métal 2 et
b. le métal 1 et le composé à base de métal 2 sont en contact l'un avec l'autre par au moins un autre élément
pour empêcher le vieillissement thermo-oxydatif de matières thermoplastiques ou pour la stabilisation de matières thermoplastiques contre la dégradation thermo-oxydative, dans laquelle on utilise comme métal 1 l'aluminium, le composé à base de métal 2 est l'oxyde de fer(III) et pour ce qui est de la matière thermoplastique il s'agit de polyamide semi-cristallin.

2. Utilisation selon la revendication 1, **caractérisée en ce que** le système stabilisant est une pâte à base de poudre d'aluminium avec enrobage de Fe₂O₃ dans de l'essence.

3. Utilisation selon la revendication 1 ou 2, **caractérisée en ce que** la distribution de tailles de particules du système stabilisant présente une valeur d₅₀ inférieure à 500 µm.

4. Utilisation selon l'une quelconque des revendications 1 à 3, **caractérisée en ce que** pour ce qui est de la matière thermoplastique il s'agit de polyamide 6 ou de polyamide 66 ayant des viscosités relatives en solution dans du m-crésol de 2,0 à 4,0.

5. Matières à mouler thermoplastiques, **caractérisées en ce qu'**elles contiennent
A 5 à 98,999 % en poids de matière thermoplastique,
B 0,001 à 20 % en poids de système stabilisant et
C 1 à 30 % en poids d'autres additifs
et comme système stabilisant on utilise un métal élémentaire 1 et un composé d'un métal 2 avec au moins un autre élément,
a. le métal 1 étant moins noble que le métal 2 et
b. le métal 1 et le composé à base de métal 2 étant en contact l'un avec l'autre par au moins un autre élément et en tant que métal 1 étant utilisé l'aluminium, en tant que composé à base de métal 2 avec au moins un autre élément étant utilisé l'oxyde de fer(III) et en tant que matière thermoplastique étant utilisé un polyamide semi-cristallin.

6. Matières à mouler thermoplastiques selon la revendication 5, **caractérisées en ce qu'**elles contiennent en outre D 1 à 70 % en poids de charges ou matières de renfort.

7. Matières à mouler thermoplastiques selon l'une quelconque des revendications 5 et 6, **caractérisées en ce qu'**on utilise comme polyamide le PA6, le PA66 ou un copolyamide de PA6 ou PA66.

8. Utilisation des matières à mouler thermoplastiques selon l'une quelconque des revendications 5 à 7, pour la production de pièces de construction et d'articles à stabilité élevée vis-à-vis de la dégradation thermo-oxydative, de préférence dans l'industrie électrique, électronique, des télécommunications, de la technologie de l'information, de l'informatique, dans le domaine ménager, le sport, en médecine ou dans l'industrie du divertissement, de façon particulièrement préférée dans des véhicules automobiles, de façon tout particulièrement préférée pour le compartiment moteur de véhicules automobiles.

9. Utilisation de matières à mouler thermoplastiques selon la revendication 8, pour la production de pièces de construction et d'articles à stabilité supplémentaire vis-à-vis de l'endommagement photo-oxydatif, de préférence d'installations de captage de l'énergie solaire.

10. Procédé pour la production de matières à mouler thermoplastiques selon l'une quelconque des revendications 5 à 7, **caractérisé en ce qu'**on mélange les composants A à C et éventuellement encore D en proportions pondérales convenables, de préférence à une température de 220 à 360 °C, de façon particulièrement préférée par incorporation, mélange, malaxage, compoundage, extrusion ou laminage.
